# EUROPÄISCHE PATENTSCHRIFT

(11) **EP 1 306 254 B1**
(45) Veröffentlichungstag und Bekanntmachung des Hinweises auf die Patenterteilung: **27.10.2004**
(21) Anmeldenummer: 02017367.0
(22) Anmeldetag: 02.08.2002
(51) Int. Cl.: B60J 5/10, B60J 1/18

(54) **Kraftfahrzeug-Heckklappe**
Tailgate for a vehicle
Hayon arrière pour véhicule

(30) Priorität: 05.09.2001 DE 10143643
(43) Veröffentlichungstag der Anmeldung: 02.05.2003
(73) Patentinhaber: Wagon Automotive GmbH, 63857 Waldaschaff (DE)
(72) Erfinder: Scheid, Franck, 57410 Gros-Rederching (FR)
(74) Vertreter: Gesthuysen, von Rohr & Eggert

(56) Entgegenhaltungen:
- DE-A- 19 938 511
- JP-A- 11 115 498
- US-A- 6 000 747
- US-A- 6 053 562
- US-B1- 6 234 564

## Beschreibung

Die Erfindung betrifft eine Kraftfahrzeug-Heckklappe mit den Merkmalen des, in US 6 053 562 offenbarten Oberbegriffs von Anspruch 1.

Eine bekannte Heckklappe in Metall-/Kunststoff-Verbundkonstruktion (WO 98/09833 A1), zeichnet sich durch Nutzung eines Tragrahmens aus einem geschlossenen oder offenen Metallhohlprofil aus, wobei Außen- und Innenhaut der Heckklappe aus Kunststoff oder Leichtmetall bestehen und an diesem Tragrahmen befestigt sind. Die Scheibe ist im Scheibenbereich auf entsprechende Anklebeflächen am Tragrahmen aufgeklebt und deckt diesen seitlich überstehend mit ab. Entsprechendes gilt für die aus Kunststoff bestehende Türaußenwandung im Wandungsbereich.

Neben dem erheblichen Vorteil hinsichtlich des Gewichts der aus dem Stand der Technik bekannten, zuvor erläuterten Heckklappe, ergeben sich weitere Vorteile. Die Montage der Türaußenwandung ist unabhängig von deren Gestaltung. Die Anbauteile können am Schluß montiert werden, da die Türaußenwandung und anschließend die Scheibe am Schluß auf den Tragrahmen aufgesetzt werden. Die Werkzeugkosten sind geringer als bei Heckklappen in Schalenbauweise. Die Farbwahl ist weitgehend flexibel, da sie durch die Türaußenwandung maßgeblich bestimmt wird. Die Grundkonstruktion kann immer gleich sein.

Das zuvor erläuterte Grundkonzept einer Heckklappe ist bereits in einer vorteilhaften Weise ausgestaltet und weitergebildet worden (DE 199 38 511 A1). Bei dieser Heckklappe ist der Tragrahmen im Wandungsbereich mit einem zur Außenseite offenen Einsteckkanal versehen, während die Türaußenwandung einen zu der Innenseite abragenden Einsteckflansch aufweist, mit dem sie in den Einsteckkanal eingesteckt ist. Im Bereich des Verbindungsprofils gibt es einen entsprechenden Einsteckkanal, so daß insgesamt die Türaußenwandung auf den Wandungsbereich des Tragrahmens aufgesteckt werden kann. Die Scheibe ist hier im Scheibenbereich fest aufgeklebt.

Bislang ist nur eine Kraftfahrzeug-Heckklappe mit einer feststehenden Scheibe erläutert worden. Bekannt sind allerdings auch Kraftfahrzeug-Heckklappen mit einer selbst wiederum aufklappbaren Scheibe. Die aufklappbare Scheibe ist dann am Verbindungsprofil mittels eines Verschlußelementes festgelegt. Sie kann bei Bedarf aufgeklappt, also hochgeschwenkt werden (US 6 000 747 A).

Kraftfahrzeug-Heckklappen mit selbst wieder aufschwenkbaren Scheiben sind aus dem Stand der Technik nur in Schalenbauweise bekannt. Überträgt man die bei der Schalenbauweise realisierte Anbringung einer aufklappbaren Scheibe auf das Konzept der Tragrahmen-Heckklappe (DE 199 38 511 A1), so muß man von der den Tragrahmen am oberen Rand überfassenden Scheibe abgehen, weil dort am Tragrahmen die die Scheibe schwenkbar anlenkenden Scharniere angebracht sind. Man bekommt so ein Dichtungsproblem am oberen Rand der Scheibe und eine Beeinträchtigung des Sichtfeldes. Tatsache ist, daß man bei einer Heckklappe mit ihrerseits aufklappbarer Scheibe regelmäßig doch nur die Schalenstruktur realisiert (US 6 000 747 A).

Der Lehre liegt das Problem zugrunde, eine nach dem aus dem Stand der Technik bekannten Leichtbaukonzept mit Tragrahmen gestaltete Kraftfahrzeug-Heckklappe anzugeben, die für die Verwendung mit feststehender Scheibe und mit aufklappbarer Scheibe gleichermaßen geeignet ist und eine Grundkonstruktion aufweist, die für beide Varianten möglichst universell geeignet ist.

Die zuvor aufgezeigte Problemstellung löst die erfindungsgemäße Kraftfahrzeug-Heckklappe mit den Merkmalen des Anspruchs 1. Bevorzugte Ausgestaltungen und Weiterbildungen sind Gegenstand der Unteransprüche.

Erfindungsgemäß gelingt es, eine Kraftfahrzeug-Heckklappe zu realisieren, die sowohl mit einer festen Scheibe als auch mit einer selbst wieder aufklappbaren Scheibe ausgerüstet werden kann. Für beide Varianten ist die Grundkonstruktion der Heckklappe praktisch dieselbe, ca. 90 % der Teile der Heckklappe sind für beide Varianten gleich. Die Grundidee der Erfindung besteht darin, die beweglichen Scharnierteile der aufklappbaren Scheibe mittels der Scharnierelemente ebenfalls an den feststehenden Scharnierböcken, an denen die Heckklappe insgesamt schwenkbar gelagert ist, zu lagern. Man hat so für die Heckklappe und die aufklappbare Scheibe ein und dieselbe Drehachse und ermöglicht es, daß die Scheibe auch dann, wenn sie selbst aufklappbar ist, den Tragrahmen nach wie vor vollflächig überfaßt. Dichtungsprobleme treten so auch am oberen Rand des Tragrahmens nicht auf. Das Sichtfeld der Heckklappe im Scheibenbereich ist für die Heckklappe mit aufklappbarer Scheibe nicht kleiner als für die Heckklappe mit feststehender Scheibe.

Nach besonders bevorzugter Lehre ist der Tragrahmen auf die universelle Anwendbarkeit mit feststehender oder aufklappbarer Scheibe dadurch eingerichtet, daß das den Tragrahmen bildende Metallprofil im Scheibenbereich einen Befestigungsflansch für eine Scheibendichtung für eine aufklappbare Scheibe und an der Außenseite eine Anklebefläche für eine feststehende Scheibe aufweist.

Von besonderer Bedeutung ist ferner eine Ausgestaltung, die dadurch gekennzeichnet ist, daß die Scharnierlaschen mit dem Anbringungsbereich für das jeweilige Scharnierelement über den oberen Rand des Tragrahmens nach oben überstehen. Durch die so angeordneten Scharnierlaschen liegen die Anbringungsbereiche der Scharnierelemente oberhalb des oberen Randes des Tragrahmens und können von den beweglichen Scharnierteilen der Scheibe, die den Tragrahmen ja nach oben überfaßt oder überfassen kann, ohne weiteres erreicht werden.

Die Variante von Anspruch 4 kann man auch bei der erfindungsgemäßen Heckklappe zweckmäßig einsetzen, weil man hier dann sogleich den Bereich hat, in dem die beweglichen Scharnierteile der Scheibe bei Einsatz einer aufklappbaren Scheibe an den Scharnierelementen angreifen können.

Im Stand der Technik DE 199 38 511 A1 ist ein Spoiler vorgesehen und vollständig auf der feststehenden Scheibe angebracht. Im vorliegenden Fall empfiehlt sich eine Konstruktion gemäß Anspruch 5. Der Spoiler wird im Regelfall eine Unterkonstruktion haben, die diese Anbringung durch Anschweißen oder, vorzugsweise, durch Anschrauben erlaubt.

Mit Anspruch 9 schafft man eine eher klassische Anbringungsmöglichkeit für eine als Metallblech, insbesondere als Leichtmetallblech ausgeführte Türaußenwandung, ohne besondere Profilierungen im Metallprofil des Tragrahmens ausbilden zu müssen. Das ist insbesondere dann zweckmäßig, wenn das Metallprofil des Tragrahmens aus Stahl besteht.

Im folgenden wird die Erfindung anhand einer lediglich Ausführungsbeispiele darstellenden Zeichnung näher erläutert. In der Zeichnung zeigt
- Fig. 1: einen Tragrahmen einer erfindungsgemäßen Kraftfahrzeug-Heckklappe in einer Heckklappe in einer Ansicht von der Außenseite her,
- Fig. 2: den Tragrahmen aus Fig. 1, nunmehr von der Innenseite aus gesehen, bereits mit von außen aufgebrachten Anbauteilen versehen,
- Fig. 3: den oberen Randbereich einer erfindungsgemäßen Heckklappe mit schwenkbar angelenkter Scheibe,
- Fig. 4: einen Schnitt im Bereich des Scheibenträgers aus Fig. 3,
- Fig. 5: den Scharnierbereich einer erfindungsgemäßen Heckklappe mit aufklappbarer Scheibe,
- Fig. 6: den Scharnierbereich einer erfindungsgemäßen Heckklappe mit feststehender Scheibe.

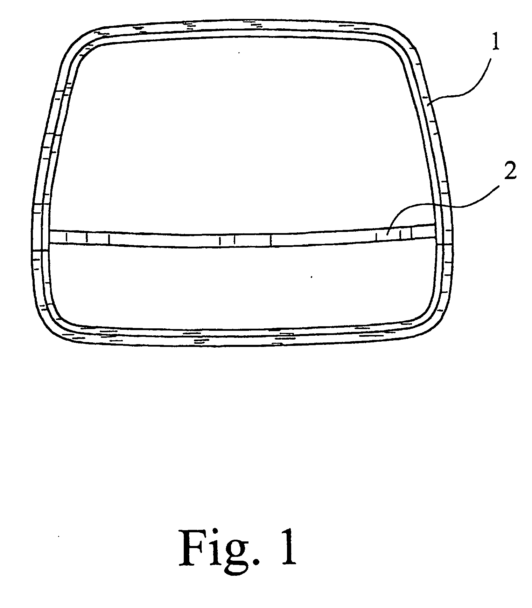

Der Gegenstand der Erfindung ist eine Leichtbau-Kraftfahrzeug-Heckklappe mit Tragrahmen. Diese Heckklappe weist zunächst einen als Metallprofil, insbesondere als Metallhohlprofil ausgeführten und im wesentlichen umlaufenden Tragrahmen 1 auf. Diesen Tragrahmen 1 erkennt man in Fig. 1.

Fig. 1 macht deutlich, daß der Tragrahmen 1 einen oberen Scheibenbereich und einen unteren Wandungsbereich ausbildet. Am Übergang von Scheibenbereich und Wandungsbereich ist im Tragrahmen 1 quer angeordnet ein Verbindungsprofil 2, ebenfalls ausgeführt als Metallprofil, insbesondere Metallhohlprofil, angeordnet.

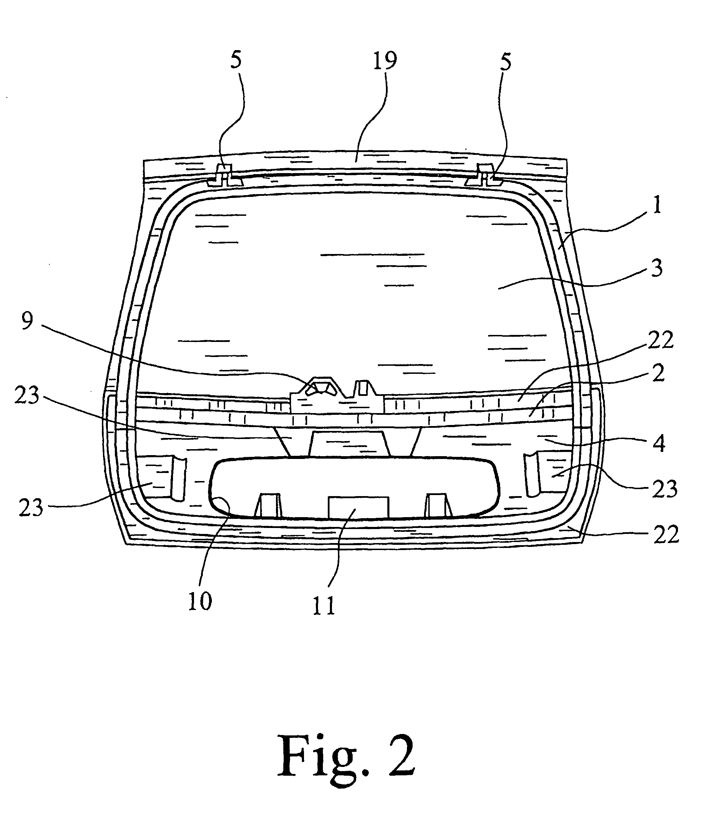

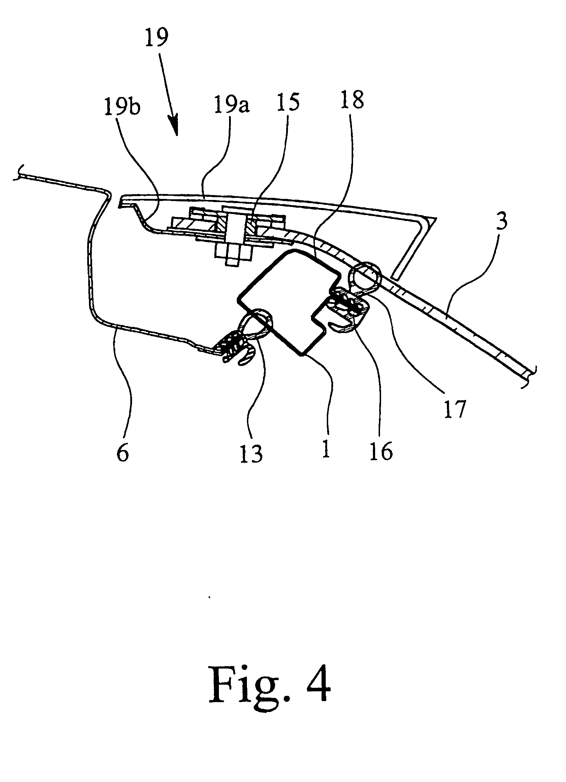

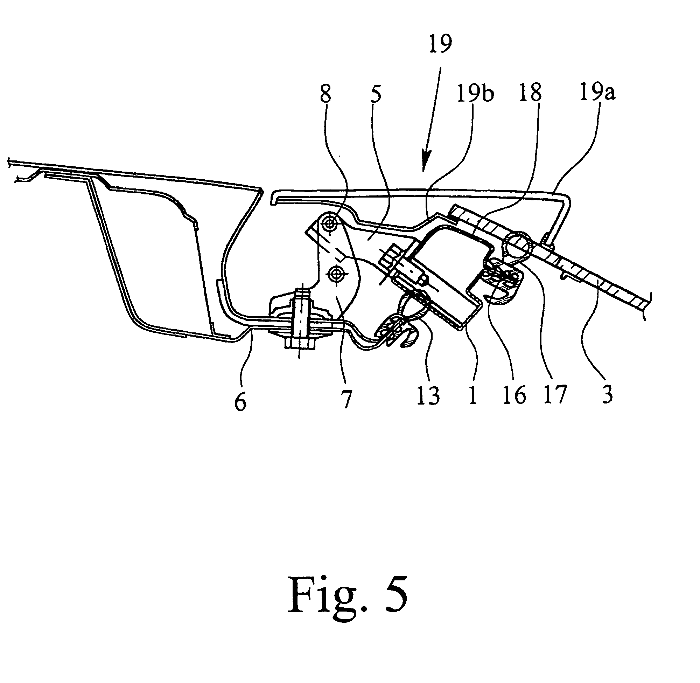

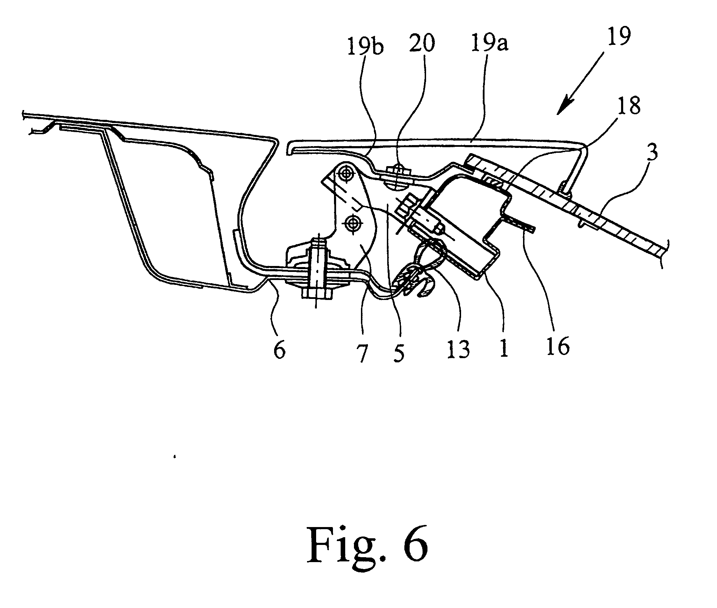

Fig. 2 zeigt die mit Anbauteilen komplettierte Heckklappe mit dem Tragrahmen 1, nunmehr von der Innenseite aus gesehen. Man erkennt eine im Scheibenbereich am Tragrahmen 1 befestigte Scheibe 3. Im dargestellten Ausführungsbeispiel handelt es sich um eine feststehende, am Tragrahmen 1 angeklebte Scheibe 3. Im Wandungsbereich erkennt man am Tragrahmen 1 eine dort befestigte Türaußenwandung 4. Im Scheibenbereich am oberen Rand des Tragrahmens 1 sind mit dem Tragrahmen 1 bewegliche Scharnierlaschen 5 angebracht, die bei montierter Heckklappe mit an einem feststehenden Karosserieteil 6 (Fig. 4, 5 und 6) angebrachten feststehenden Scharnierböcken 7 (Fig. 5 und 6) verbindbar sind. Das feststehende Karosserieteil 6 ist beispielsweise der Dachrahmen eines entsprechenden Karosserieausschnittes, an dem die feststehenden Scharnierböcke 7 zum Aufhängen der Heckklappe angebracht, insbesondere angeschraubt sind.

Die Anbringung der beweglichen Scharnierlaschen 5 der Heckklappe an den feststehenden Scharnierböcken 7 des Karosserieteils 6 erfolgt mittels eines Scharnierelementes 8, wobei es sich insbesondere um einen Scharnierstift handelt, der die entsprechende Schwenkachse bildet. Ein Scharnierelement 8 ist nicht als Zahl zu verstehen, es kann durchaus sein, daß die konkrete Scharnierkonstruktion mehrere Scharnierstifte aufweist. Es ist auch nicht notwendig so, daß die Scharnierelemente 8 zu Scharnierlaschen 5 und Scharnierböcken 7 separate Teile sind. Sie können auch mit einem der beiden beteiligten Elemente einstückig ausgeführt sein.

Fig. 2 läßt verschiedene weitere Baugruppen der Heckklappe angedeutet erkennen, beispielsweise ein am Verbindungsprofil 2 angebrachtes Scheibenwischeraggregat 9. Ferner erkennt man einen Ausschnitt 10 in der Türaußenwandung 4 zur Anbringung einer Nummernschildbaugruppe. Schließlich erkennt man am unteren Rand des Tragrahmens 1 ein Heckklappenschloß 11.

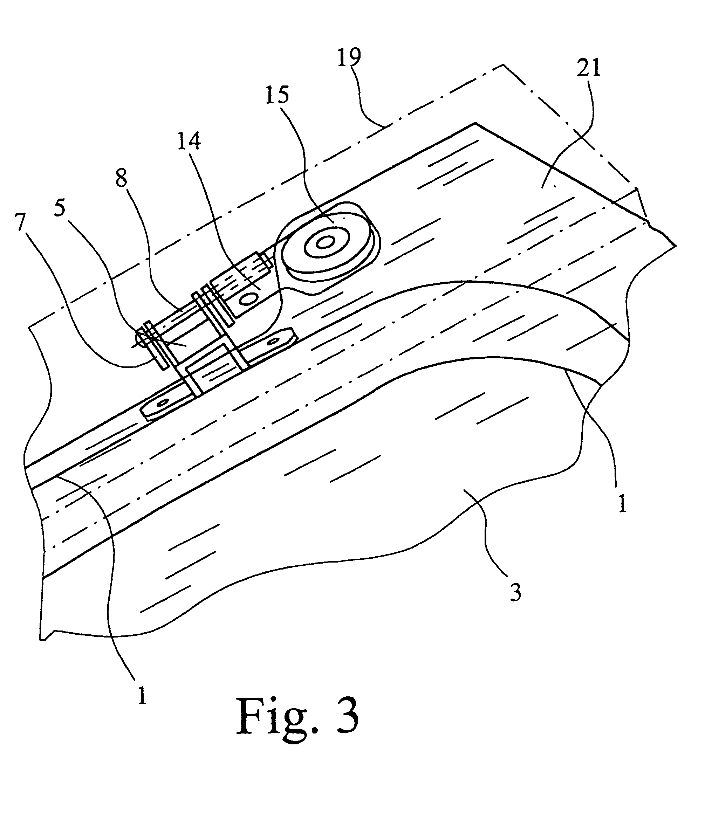

Fig. 3, 4 und 5 gehören zusammen und zeigen den oberen Eckbereich und Schnitte einer erfindungsgemäßen Heckklappe mit einer ihrerseits aufklappbaren Scheibe 3. Demgegenüber zeigt Fig. 6 einen Fig. 5 entsprechenden Schnitt bei einer Heckklappe mit einer feststehenden Scheibe 3.

Zunächst kann man gut erkennen, daß die Scharnierlaschen 5 so angeordnet und ausgebildet sind, daß bei Ausführung der Heckklappe mit einer ihrerseits aufklappbaren Scheibe 3, wie in Fig. 3, 4 und 5 dargestellt, an der Scheibe 3 angebrachte bewegliche Scharnierteile 14 mittels der Scharnierelemente 8 ebenfalls mit dem feststehenden Scharnierböcken 7 schwenkbeweglich verbindbar sind. In Fig. 3 erkennt man den das Scharnierelement 8 bildenden Scharnierstift, der seitlich nach rechts über den feststehenden Scharnierbock 7 vorsteht und dort als Schwenkachse das bewegliche Scharnierteil 14 der Scheibe 3 trägt. Das bewegliche Scharnierteil 14 ist seinerseits mittels eines üblichen großflächigen Scheibenträgers 15 mit der beweglichen Scheibe 3 verbunden. Fig. 4 zeigt diese typische Schraubverbindung des Scheibenträgers 15 an der Scheibe 3.

Das den Tragrahmen 1 bildende Metallhohlprofil, hier ausgeführt als durch Abkantung hergestelltes, streckgebogenes Stahl-Hohlprofil, weist im Scheibenbereich einen Befestigungsflansch 16 für eine Scheibendichtung 17 für die aufklappbare Scheibe 3 auf. Außerdem erkennt man an der Innenseite des Tragrahmens 1 eine Anlagefläche für die bereits angesprochene Klappendichtung 13, die am feststehenden Karosserieteil 6 an einem entsprechenden Karosserieteil 6 an einem entsprechenden Aufsteckflansch angebracht ist. Ferner zeigt der Tragrahmen 1 an der Außenseite eine Anklebefläche 18 für eine feststehende Scheibe 3. Die Anklebefläche 18 ist beim Ausführungsbeispiel von Fig. 4 nicht genutzt. Dort ist die Scheibendichtung 17 vorgesehen. Beim Ausführungsbeispiel von Fig. 6 ist der Befestigungsflansch 16 ungenutzt, eine Scheibendichtung 17 ist nicht vorhanden, weil sie bei der feststehenden Scheibe 3 nicht notwendig ist. Hier wird die Anklebefläche 18 am Tragrahmen 1 genutzt. Wichtig ist, daß der Tragrahmen 1 für die Heckklappe mit feststehender Scheibe 3 in gleicher Weise genutzt werden kann wie für die Heckklappe mit ihrerseits aufklappbarer Scheibe 3. Der Tragrahmen 1 ist für beide Varianten bereits konstruktiv vorbereitet.

Fig. 3 bis 6 machen deutlich, daß auch an anderer Stelle, nämlich bei den Scharnieren, die Konstruktion so getroffen ist, daß die Heckklappe grundsätzlich für beide Varianten ohne große Änderungen einsetzbar ist. Es ist nämlich hier vorgesehen, daß die Scharnierlaschen 5 mit dem Anbringungsbereich für das jeweilige Scharnierelement 8 über den oberen Rand des Tragrahmens 1 nach oben überstehen. Dadurch ist es besonders einfach möglich, daß die Scharnierteile 14 der ihrerseits aufklappbaren Scheibe 3 ebenfalls mittels des Scharnierelementes 8 mit den feststehenden Scharnierböcken 7 schwenkbeweglich verbunden werden können, ohne besondere konstruktive Maßnahmen vornehmen zu müssen. Solche zusätzlichen konstruktiven Maßnahmen könnten andernfalls beispielsweise in winkelförmig den Tragrahmen 1 umfassenden Scharnierbügeln o. dgl. bestehen. Das alles ist bei der hier dargestellten Konstruktion nicht notwendig. Die Scheibe 3 kann den Tragrahmen 1 überfassen und unmittelbar gegen den Tragrahmen 1 abgedichtet sein, was für die Gesamtkonstruktion von erheblichem Vorteil ist.

Bereits im allgemeinen Teil der Beschreibung ist darauf hingewiesen worden, daß aus dem Stand der Technik (DE 199 38 511 A1) Scharnierlaschen 5 bekannt sind, die in den oberen seitlichen Bereichen am Tragrahmen 1 angebracht sind. Das ist insbesondere dann zweckmäßig, wenn der Tragrahmen 1 an den oberen Ecken bogenförmig geführt ist. Das ist auch im dargestellten Ausführungsbeispiel so vorgesehen und ohnehin bei einem streckgebogenen Metallhohlprofil als Tragrahmen 1 gar nicht anders machbar. Die in den jeweiligen oberen Ecken verbleibenden freien Zwickel können so für die Anordnung der Scharnierlaschen 5, der Scharnierelemente 8 und bei klappbarer Scheibe 3 der beweglichen Scharnierteile 14 dienen. Dann müssen die Scharnierlaschen 5 den oberen Rand des Tragrahmens 1 nicht oder jedenfalls nicht so weit wie ansonsten erforderlich überragen.

Das dargestellte und insoweit bevorzugte Ausführungsbeispiel zeigt jedoch die klassisch weiter nach innen versetzt am oberen Rand des Tragrahmens 1 angeordneten Scharnierlaschen 5.

Aus dem Stand der Technik bereits bekannt ist die Verwendung eines Karosseriebauteils am oberen Rand des Tragrahmens 1, der die Übergangsbereiche hier abdeckt. Dabei handelt es sich um einen im Scheibenbereich über den oberen Rand des Tragrahmens 1 überstehenden und am oberen Rand auf der Scheibe 3 aufliegenden Spoiler 19. Der Spoiler 19 besteht aus einem winkelförmigen, meist aus Kunststoff bestehenden Außenteil 19a und einem meist aus Metall bestehenden, der Befestigung des Spoilers 19 dienenden Innenteil 19b. So ist jedenfalls hier die Konstruktion bei dem dargestellten Ausführungsbeispiel getroffen.

Fig. 6 zeigt die Anbringung des Spoilers 19 bei feststehender Scheibe 3 dergestalt, daß der Spoiler 19 auf den Scharnierlaschen 5 befestigt ist. Man erkennt die Schraubbefestigung 20 in Figur 6.

Fig. 4 und 5 hingegen zeigen die Befestigung des Spoilers 19 bei selbst aufklappbarer Scheibe 3. Man erkennt, daß hier der Spoiler mit den Scharnierlaschen 5 nicht verbunden ist. Das wäre ja auch nicht zweckmäßig, weil der Spoiler 19 auf der Scheibe 3 aufliegt und mit der Scheibe 3 gegenüber dem Tragrahmen 1 schwenkbar sein muß. Dementsprechend ist vorgesehen, und das zeigt Fig. 4, daß der Spoiler 19, nämlich dessen Innenteil 19b, hier mit den beweglichen Scharnierteilen 14 der beweglichen Scheibe 3 verbunden ist. Genauer gesagt ist das Innenteil 19b des Spoilers 19 am Scheibenträger 15 mit angebracht, der wiederum Teil des beweglichen Scharnierteils 14 ist.

Bereits zuvor ist darauf hingewiesen worden, daß im dargestellten Ausführungsbeispiel und nach bevorzugter Lehre der Tragrahmen 1 als streckgebogenes Metallhohlprofil, und zwar insbesondere als Metallhohlprofil aus Stahl, ausgeführt ist. Man erkennt dies in der Zeichnung an der Zusammenführung der überstehenden Enden des Metallhohlprofils am Befestigungsflansch 16. Dort sind diese überstehenden Enden miteinander verschweißt. Natürlich gibt es auch die Möglichkeit, das ist aus dem eingangs erläuterten Stand der Technik ebenso bekannt, das Metallhohlprofil als stranggepreßtes und streckgebogenes Profil aus Leichtmetall, insbesondere aus Aluminium oder einer Aluminiumlegierung oder sonstigen Leichtmetallegierungen herzustellen.

Das in Fig. 1 dargestellte Ausführungsbeispiel zeigt im übrigen einen Tragrahmen, der, wie an sich bekannt, aus einem oberen U-Teil zur Bildung des Scheibenbereichs und einem unteren U-Teil zur Bildung des Wandungsbereichs besteht, die an ihren Enden miteinander verschweißt sind. Im Ergebnis ist der Tragrahmen 1 somit vollständig umlaufend ausgeführt. Für weitere Alternativen in dieser Hinsicht wird auch auf den eingangs erläuterten Stand der Technik (DE 199 38 511 A1) hingewiesen.

Das in Fig. 3 dargestellte Ausführungsbeispiel einer besonders bevorzugten Konstruktion einer erfindungsgemäßen Heckklappe zeichnet sich ferner dadurch aus, daß die aufklappbare Scheibe 3 an den oberen Ecken nach oben vorspringende Eckbereiche 21 aufweist, in denen die beweglichen Scharnierteile 14 an der Scheibe 3 angebracht sind, hier nämlich mittels der Scheibenträger 15 der beweglichen Scharnierteile 14. Im zwischen den Eckbereichen 21 liegenden Bereich ist die aufklappbare Scheibe 3 weniger weit nach oben hochgezogen. Das ist ohne weiteres möglich, weil dieser Bereich der Scheibe 3 ohnehin vom Spoiler 19, nämlich vom Außenteil 19a des Spoilers 19, abgedeckt wird.

Fig. 2 läßt noch eine weitere Besonderheit der Erfindung erkennen, die darin besteht, daß am Tragrahmen 1 im Wandungsbereich ein randseitig überstehendes Adapterteil 22 angebracht, insbesondere angeschweißt oder angeschraubt ist, das einen überstehenden Rand zum Aufbördeln des Randes der Türaußenwandung 4 bildet. So kann eine typische, aus Metallblech bestehende Türaußenwandung 4 ohne weitere Besonderheiten, insbesondere mit einer klassischen Fertigungstechnik, am Tragrahmen 1, der als umlaufendes Metallhohlprofil ausgeführt ist, angebracht werden. Überdies kann das Adapterteil 22, wie im Ausführungsbeispiel von Fig. 2 dargestellt, auch weitere Anbringungsbereiche 23 aufweisen, an der weitere, bereits oben erwähnte Baugruppen der Heckklappe zweckmäßig angebracht werden können. Damit ist eine Funktionstrennung zwischen Tragrahmen 1 und Adapterteil 22 erreicht, die zu einer optimalen konstruktiven Gestaltung der erfindungsgemäßen Heckklappe führt.

## Patentansprüche

1. Kraftfahrzeug-Heckklappe,
mit einem als Metallprofil ausgeführten, im wesentlichen umlaufenden Tragrahmen (1) mit einem Scheibenbereich und einem Wandungsbereich,
mit einem am Übergang von Scheibenbereich und Wandungsbereich quer im Tragrahmen (1) angeordneten Verbindungsprofil (2),
mit einer im Scheibenbereich am Tragrahmen (1) befestigten Scheibe (3) und
mit einer im Wandungsbereich am Tragrahmen (1) befestigten Türaußenwandung (4),
wobei im Scheibenbereich am oberen Rand des Tragrahmens (1) mit dem Tragrahmen (1) bewegliche Scharnierlaschen (5) angebracht sind, die bei montierter Kraftfahrzeug-Heckklappe mit an einem feststehenden Karosserieteil (6) angebrachten feststehenden Scharnierböcken (7) mittels jeweils eines Scharnierelementes (8) schwenkbeweglich verbunden sind,
**dadurch gekennzeichnet,**
**daß** der Tragrahmen (1) bei einer am Tragrahmen (1) fest angebrachten Scheibe (3) und bei einer gegenüber dem Tragrahmen (1) selbst aufklappbaren Scheibe (3) gleich ausgeführt ist und
**daß** die Scharnierlaschen (5) so angeordnet und/oder ausgebildet sind, daß bei der Ausführung der Kraftfahrzeug-Heckklappe mit einer ihrerseits aufklappbaren Scheibe (3) an der Scheibe (3) angebrachte bewegliche Scharnierteile (14) mittels der Scharnierelemente (8) ebenfalls mit den feststehenden Scharnierböcken (7) schwenkbeweglich verbindbar sind.

2. Heckklappe nach Anspruch 1, **dadurch gekennzeichnet,**
**daß** das den Tragrahmen (1) bildende Metallprofil im Scheibenbereich einen Befestigungsflansch (16) für eine Scheibendichtung (17) für eine aufklappbare Scheibe (3) und an der Außenseite eine Anklebefläche (18) für eine feststehende Scheibe (3) aufweist.

3. Heckklappe nach Anspruch 1 oder 2, **dadurch gekennzeichnet, daß** die Scharnierlaschen (5) mit dem Anbringungsbereich für das jeweilige Scharnierelement (8) über den oberen Rand des Tragrahmens (1) nach oben überstehen.

4. Heckklappe nach Anspruch 1 oder 2, **dadurch gekennzeichnet, daß** der Tragrahmen (1) an den oberen Ecken bogenförmig geführt ist und daß die Scharnierlaschen (5) in den oberen seitlichen Bereichen am Tragrahmen (1) angebracht sind und mit dem Anbringungsbereich für das jeweilige Scharnierelement (8) in den freien Zwickeln außerhalb des Tragrahmens (1) liegen.

5. Heckklappe nach einem der Ansprüche 1 bis 4, wobei ein im Scheibenbereich über den oberen Rand des Tragrahmens (1) überstehender und am oberen Rand auf der Scheibe (3) aufliegender Spoiler (19) vorgesehen ist, **dadurch gekennzeichnet, daß** der Spoiler (19) bei feststehender Scheibe (3) - vorzugsweise nur - auf den Scharnierlaschen (5), vorzugsweise im über den oberen Rand des Tragrahmens (1) nach oben überstehenden Bereich, und bei aufklappbarer Scheibe - vorzugsweise nur - auf den beweglichen Scharnierteilen (14), vorzugsweise im über den oberen Rand des Tragrahmens (1) nach oben überstehenden Bereich, befestigt ist.

6. Heckklappe nach einem der Ansprüche 1 bis 5, **dadurch gekennzeichnet,**
**daß** der Tragrahmen (1) als streckgebogenes Metallhohlprofil, insbesondere aus Stahl, ggf. auch aus Leichtmetall, ausgeführt ist.

7. Heckklappe nach Anspruch 6, **dadurch gekennzeichnet, daß** der Tragrahmen (1) aus einem oberen U-Teil zur Bildung des Scheibenbereichs und einem unteren U-Teil zur Bildung des Wandungsbereichs besteht, die miteinander zusammengeschweißt sind.

8. Heckklappe nach einem der Ansprüche 1 bis 7, **dadurch gekennzeichnet, daß** bei Vorhandensein einer aufklappbaren Scheibe (3) die aufklappbare Scheibe (3) an den oberen Ecken nach oben vorspringende Eckbereiche (21) aufweist, in denen die beweglichen Scharnierteile (14) an der Scheibe (3) angebracht sind.

9. Heckklappe nach einem der Ansprüche 1 bis 8, **dadurch gekennzeichnet, daß** am Tragrahmen (1) im Wandungsbereich ein randseitig überstehendes Adapterteil (22) angebracht, insbesondere angeschweißt und/oder angeschraubt ist, das einen überstehenden Rand zum Aufbördeln des Randes der Türaußenwandung (4) bildet.

10. Heckklappe nach Anspruch 9, **dadurch gekennzeichnet, daß** das Adapterteil (22) im Wandungsbereich umlaufend, also auch im Bereich des Verbindungsprofils (2) angeordnet ist und Anschlußelemente (22) für weitere Baugruppen der Kraftfahrzeug-Heckklappe aufweist.

## Claims

1. An automobile hatchback,
having an essentially peripheral supporting frame (1) designed as a metal section, having a windshield area and a wall area,
having a connecting section (2) arranged transversely in the supporting frame (1) at the transition from windshield area and wall area,
having a windshield (3) mounted on the supporting frame (1) in the windshield area and having an outside door panel (4) mounted on the supporting frame (1) in the wall area,
wherein hinge brackets (5) that are movable with the supporting frame (1) are mounted on the upper edge of the supporting frame (1) in the windshield area and are pivotably connectable by at least one hinge element (8) each to stationary hinge blocks (7) mounted on a stationary body part (6) when the automobile hatchback is installed,
**characterized in**
**that** the support frame (1) is the same for a windshield (3) that is stationary on the support frame (1) and for a windshield (3) that is itself openable from the support frame (1) and
**that** the hinge brackets (5) are arranged and/or designed so that movable hinge parts (14) mounted on the windshield (3) in the case of the design of the automobile hatchback having a windshield (3) that is itself openable are also pivotably connectable by the hinge elements (8) to the stationary hinge blocks (7).

2. Hatchback according to claim 1, **characterized in that** the metal section forming the supporting frame (1) has a mounting flange (16) for a windshield gasket (17) for an openable windshield (3) in the windshield area and on the outside it has an adhesive surface (18) for a stationary windshield (3).

3. Hatchback according to claim 1 or 2, **characterized in that** the hinge brackets (5) with the mounting area for the respective hinge element (8) project upward above the upper edge of the supporting frame (1).

4. Hatchback according to claim 1 or 2, **characterized in that** the supporting frame (1) is designed with a curve in the upper comers and that the hinge brackets (5) are mounted on the supporting frame (1) in the upper lateral areas and together with the mounting area for the respective hinge element (8) they are situated in the free zones outside the supporting frame (1).

5. Hatchback according to any one of claims 1 to 4, wherein a spoiler (19) that rests on the windshield (3) at the upper edge is provided in the windshield area, projecting above the upper edge of the supporting frame (1), **characterized in that** the spoiler (19) is mounted - preferably only - on the hinge brackets (5), preferably in the area projecting upward above the upper edge of the supporting frame (1) in the case of a stationary windshield (3) and is mounted - preferably only - on the movable hinge parts (14), preferably in the area projecting upward above the upper edge of the supporting frame (1) in the case of the openable windshield (3).

6. Hatchback according to any one of claims 1 to 5, **characterized in that** the supporting frame (1) is designed as a hollow metal section, in particular of steel, optionally also of light metal.

7. Hatchback according to claim 6, **characterized in that** the supporting frame (1) is made of an upper U-shaped part to form the windshield area and a lower U-shaped part to form the wall area, the two parts being welded together.

8. Hatchback according to any one of claims 1 to 7, **characterized in that** in the case of an openable windshield (3), the openable windshield (3) has comer areas (21) that project upward in the upper comers where the movable hinge parts (14) are mounted on the windshield (3).

9. Hatchback according to any one of claims 1 to 8, **characterized in that** an adapter part (22), which forms a projecting edge for flanging the edge of the outside door panel (4), is mounted on the supporting frame (1), preferably by welding and/or screwing.

10. Hatchback according to claim 9, **characterized in that** the adapter part (22) is arranged peripherally in the wall area, namely in the area of the connection section (2) and has connecting elements (22) for additional modules for the automotive hatchback.

## Revendications

1. Hayon arrière pour véhicule automobile, comprenant un cadre porteur (1) réalisé en tant que profilé métallique et essentiellement périphérique avec une région de vitre et une région de paroi, comprenant un profilé de liaison (2) disposé au niveau de la transition entre la région de vitre et la région de paroi transversalement dans le cadre porteur (1), comprenant une vitre (3) fixée dans la région de vitre sur le cadre porteur (1) et comprenant une paroi extérieure de porte (4) fixée dans la région de paroi sur le cadre porteur (1), des languettes à charnière (5) mobiles avec le cadre porteur (1) étant montées dans la région de vitre sur le bord supérieur du cadre porteur (1), lesquelles sont reliées de manière mobile à pivotement sur des supports à charnière (7) fixes montés sur une partie de carrosserie fixe (6) à chaque fois au moyen d'un élément à charnière (8) en cas de hayon arrière pour véhicule automobile monté,
**caractérisé en ce que**
le cadre porteur (1) est réalisé de la même manière en cas de vitre (3) montée fixement sur le cadre porteur (1) et en cas de vitre (3) dépliable automatiquement par rapport au cadre porteur (1) et **en ce que** les languettes à charnière (5) sont disposées et/ou réalisées de sorte que lors de la réalisation du hayon arrière pour véhicule automobile avec une vitre (3) dépliable de son côté, des parties de charnière (14) mobiles montées sur la vitre (3) peuvent être reliées de manière mobile à pivotement au moyen des éléments à charnière (8) également avec les supports à charnière fixes (7).

2. Hayon arrière selon la revendication 1, **caractérisé en ce que** le profilé métallique formant le cadre porteur (1) présente dans la région de vitre une bride de fixation (16) pour un joint de vitre (17) pour une vitre dépliable (3) et sur le côté extérieur une surface collante (18) pour une vitre fixe (3).

3. Hayon arrière selon la revendication 1 ou 2, **caractérisé en ce que** les languettes à charnière (5) dépassent vers le haut avec la région de montage pour l'élément à charnière respectif (8) au-delà du bord supérieur du cadre porteur (1).

4. Hayon arrière selon la revendication 1 ou 2, **caractérisé en ce que** le cadre porteur (1) est guidé en forme d'arc sur les coins supérieurs et **en ce que** les languettes à charnière (5) sont montées dans les régions latérales supérieures sur le cadre porteur (1) et se trouvent avec la région de montage pour l'élément à charnière respectif (8) dans les coins libres en dehors du cadre porteur (1).

5. Hayon arrière selon l'une quelconque des revendications 1 à 4, un déporteur (19) dépassant dans la région de vitre au-delà du bord supérieur du cadre porteur (1) et reposant sur le bord supérieur sur la vitre (3) étant prévu, **caractérisé en ce que** le déporteur (19) est fixé, en cas de vitre fixe (3), de préférence uniquement sur les languettes à charnière (5), de préférence dans la région dépassant vers le haut au-delà du bord supérieur du cadre porteur (1) et, en cas de vitre dépliable, de préférence uniquement sur les parties de charnière mobiles (14), de préférence dans la région dépassant vers le haut au-delà du bord supérieur du cadre porteur (1).

6. Hayon arrière selon l'une quelconque des revendications 1 à 5, **caractérisé en ce que** le cadre porteur (1) est réalisé en tant que profilé creux métallique dressé par traction et flexion, notamment en acier, éventuellement également en métal léger.

7. Hayon arrière selon la revendication 6, **caractérisé en ce que** le cadre porteur (1) se compose d'une partie en U supérieure en vue de la formation de la région de vitre et d'une partie en U inférieure en vue de la formation de la région de paroi, lesquelles sont soudées ensemble.

8. Hayon arrière selon l'une quelconque des revendications 1 à 7, **caractérisé en ce qu'**en présence d'une vitre dépliable (3), la vitre dépliable (3) présente des régions de coins (21) saillant vers le haut dans les coins supérieurs, régions dans lesquelles les parties de charnière mobiles (14) sont montées sur la vitre (3).

9. Hayon arrière selon l'une quelconque des revendications 1 à 8, **caractérisé en ce qu'**une partie d'adaptateur (22) saillant du côté du bord est montée, notamment soudée et/ou vissée sur le cadre porteur (1) dans la région de paroi, laquelle forme un bord saillant en vue du bordage du bord de la paroi extérieure de porte (4).

10. Hayon arrière selon la revendication 9, **caractérisé en ce que** la partie d'adaptateur (22) est disposée de manière périphérique dans la région de paroi, c'est-à-dire également dans la région du profilé de liaison (2) et présente des éléments de raccordement (22) pour d'autres modules du hayon arrière pour véhicule automobile.
